# EUROPEAN PATENT APPLICATION

(11) **EP 4 385 829 A1**
(43) Date of publication of application: **19.06.2024**
(21) Application number: 22214373.7
(22) Date of filing: 16.12.2022
(51) Int. Cl.: B60R 19/34, F16F 7/12, B60D 1/00

(54) **ENERGY-ABSORBING SYSTEM**

(71) Applicant: VALEO SYSTEMES THERMIQUES, 78320 Le Mesnil Saint-Denis (FR)
(72) Inventor: SUBRAMANIAN, Arunkumar, 600130 Chennai (IN); MOHAN, Arul Kumaran, 600130 Chennai (IN); VELASCO, Sebastien, 600130 Chennai (IN); DA COSTA PITO, Sergio, 78322 Le Mesnil-Saint-Denis Cedex (FR)
(74) Representative: Valeo Systèmes Thermiques

(57) **Abstract**

An energy-absorbing system (100) of a vehicle comprising an energy-absorbing element (200) and a towing element (300). The energy-absorbing element (200) comprises at least one sheet (202) forming a structure with a first portion (204) adapted to connect to a body of the vehicle and a second portion (206) connected to the first portion (204). The towing element (300) comprises a third portion (302) at least partially surrounded by the energy-absorbing element (200), is fixed to the second portion (206) of the energy-absorbing element (200). The towing element (300) further comprises a fourth portion (304) connected to the third portion (302), is extending out of the energy-absorbing element (200).

## Description

### TECHNICAL FIELD

The present invention relates to an energy-absorbing system of a vehicle.

### BACKGROUND

Generally, a vehicle is provided with a number of energy-absorbing elements such as crash box, bumper beam and so on. When the vehicle undergoes any collision with another vehicle or any other body, the energy-absorbing elements deform and absorb impact energy, thereby preventing impact energy from reaching vehicle cabin and causing harm to vehicle occupant. Further, the vehicle is provided with a towing element. When the vehicle encounters any break-down and is unable to run, the towing element is connected to a tow truck through an intermediate element, for towing the vehicle.

A first end of the towing element is connected with the bumper beam and a second end of the towing element is adapted to connect the vehicle to the tow truck. The crash box is made of sheets and is over-moulded in plastic. The bumper beam together with the first end of the towing element is connected with a first end of the crash box, through a first set of intermediate elements, and a second end of the crash box is connected with a body of the vehicle through a second set of intermediate elements.

Since the crash box is connected with the towing element and the body of the vehicle through intermediate elements, deformation or shearing occurs in the crash box and towing element assembly, when the tow truck tows the vehicle. Hence, the towing load performance is reduced. Further, there is a risk of the towing element being separated from the crash box assembly, leading to the vehicle being disconnected from the tow truck.

### SUMMARY

In the present description, some elements or parameters may be indexed, such as a first element and a second element. In this case, unless stated otherwise, this indexation is only meant to differentiate and name elements that are similar but not identical. No idea of priority should be inferred from such indexation, as these terms may be switched without betraying the invention. Additionally, this indexation does not imply any order in mounting or use of the elements of the invention.

In view of the foregoing, an embodiment of the present invention herein provides an energy-absorbing system of a vehicle. The energy-absorbing system comprises an energy-absorbing element and a towing element. The energy-absorbing element comprises at least one sheet forming a structure with a first portion adapted to connect to a body of the vehicle and a second portion connected to the first portion. In one example, the structure of the energy-absorbing element is a hollow structure. In another example, the structure of the energy-absorbing element is a channel structure.

The towing element comprises a third portion at least partially surrounded by the energy-absorbing element, is fixed to the second portion of the energy-absorbing element. The towing element further comprises a fourth portion connected to the third portion, is extending out of the energy-absorbing element. In present invention, the third portion of the towing element is surrounded by the energy-absorbing element and is fixed to the second portion of the energy-absorbing element. Hence, the towing element does not separate from the energy-absorbing element, when a tow truck tows the vehicle.

In one example, the first portion forms an open end of the energy-absorbing element and the second portion together with the towing element forms a closed end of the energy-absorbing element. In particular, the second portion together with the third portion forms a closed end and the fourth portion extends out of the energy-absorbing element. Hence, the third portion of the towing element is secured within the energy-absorbing element.

Further, the first portion of the energy-absorbing element comprises at least one flange adapted to connect to the body of the vehicle. In one example, the third portion of the towing element is fixed to the second portion of the energy-absorbing element by over-moulding in plastic. In another example, the third portion of the towing element is fixed to the second portion of the energy-absorbing element by fasteners. Hence, the energy-absorbing element is connected with the body of the vehicle and the towing element without any intermediate elements, resulting in strong connection between the components and reduced manufacturing cost.

In one aspect, the energy-absorbing element comprises one sheet forming various sides of the energy-absorbing element. Further, the third portion of the towing element is disposed behind the sheet at the second portion of the energy-absorbing element, which means that the third portion and the fourth portion are disposed on opposed sides of the sheet.

In another aspect, the energy-absorbing element comprises two sheets, a first sheet and a second sheet. The first and second sheets together form various sides of the energy-absorbing element. Thus, the feasibility of manufacturing the energy-absorbing element in various shapes is increased.

Further, the third portion of the towing element is disposed behind at least one of the first and second sheets at the second portion of the energy-absorbing element, which means that the third portion and the fourth portion are disposed on opposed sides of one of the first and second sheets. In one example, the third portion of the towing element is disposed behind both the first and second sheets at the second portion of the energy-absorbing element, which means that the third portion and the fourth portion are disposed on opposed sides of both of the first and second sheets. In another example, the third portion of the towing element is disposed in between the first and second sheets at the second portion of the energy-absorbing element. Since, the third portion of the towing element is fixed to two sheets, the first and second sheets at the second portion of the energy-absorbing element, more force is required to separate the towing element from the energy-absorbing element.

In one aspect, the energy-absorbing element comprises at least one wave projection. Hence, the stiffness of the energy-absorbing element is increased. Consequently, the energy-absorbing element is able to withstand more towing load and more impact energy.

### BRIEF DESCRIPTION OF DRAWINGS

Other characteristics, details and advantages of the invention can be inferred from the description of the invention hereunder. A more complete appreciation of the invention and many of the attendant advantages thereof will be readily obtained, as the same becomes better understood by reference to the following detailed description when considered in connection with the accompanying figures, wherein:
FIG. 1 illustrates a perspective view of an energy-absorbing system of a vehicle, in accordance with an embodiment of the present invention;
FIG. 2 illustrates an exploded view of the energy-absorbing system of FIG. 1;
FIG. 3 illustrates a sectional view of the energy-absorbing system of FIG. 1, at the plane A-A'; and
FIG. 4 illustrates a sectional view of the energy-absorbing system of FIG. 1, at the plane B-B'.

### DETAILED DESCRIPTION OF PREFERRED EMBODIMENTS

It must be noted that the figures disclose the invention in a detailed enough way to be implemented, the figures helping to better define the invention, if need be. The invention should however not be limited to the embodiments disclosed in the description.

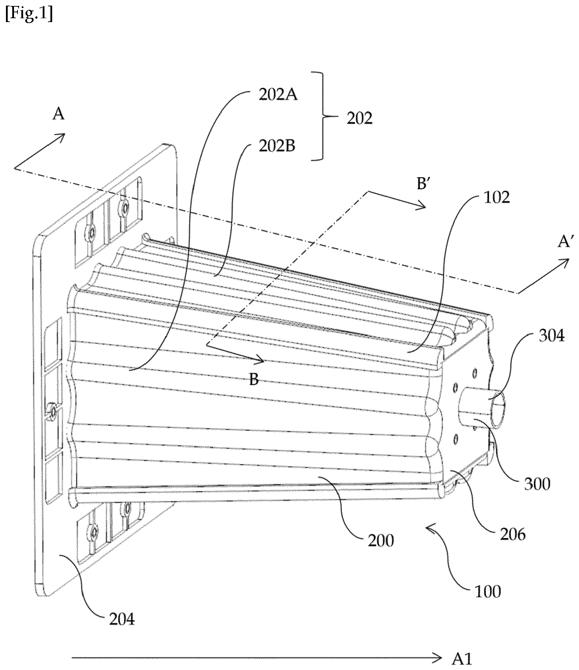

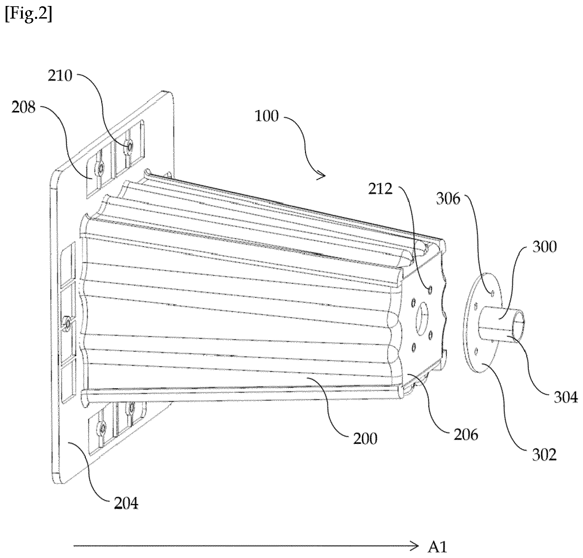

FIG. 1 illustrates a perspective view of an energy-absorbing system 100 of a vehicle, in accordance with an embodiment of the present invention, and FIG. 2 illustrates an exploded view of the energy-absorbing system 100 of FIG. 1. In present embodiment, the energy-absorbing system 100 comprises an energy-absorbing element 200 and a towing element 300. The energy-absorbing element 200 comprises at least one sheet 202 forming a structure with a first portion 204 adapted to connect to a body of the vehicle and a second portion 206 connected to the first portion 204. In one example, the structure of the energy-absorbing element 200 is a hollow structure. In another example, the structure of the energy-absorbing element 200 is a channel structure. The channel structure has at least one open side, such as a U-shaped profile.

The towing element 300 comprises a third portion 302 at least partially surrounded by the energy-absorbing element 200, is fixed to the second portion 206 of the energy-absorbing element 200. The towing element 300 further comprises a fourth portion 304 connected to the third portion 302, is extending out of the energy-absorbing element 200. The fourth portion 304 extends from the third portion 302, in a first direction A1 from the first portion 204 to the second portion 206. In one example, the third portion 302 is a base portion and the fourth portion 304 is a protrusion portion extending from the base portion.

In one example, the first portion 204 forms an open end of the energy-absorbing element 200 and the second portion 206 together with the towing element 300 forms a closed end of the energy-absorbing element 200. In particular, the second portion 206 together with the third portion 302 of the towing element 300 forms a closed end and the fourth portion 304 of the towing element 300 extends out of the energy-absorbing element 200. Hence, the third portion 302 of the towing element 300 is secured within the energy-absorbing element 200. Further, the energy-absorbing element 200 can be of any shape, such as but not limited to prism, trapezoidal prism, cylinder or truncated cone.

In one aspect, the first portion 204 of the energy-absorbing element 200 comprises at least one flange 208 adapted to connect to the body of the vehicle. In one example, the flanges 208 are connected to the body of the vehicle by a first set of fasteners. The first set of fasteners can be any type of fastener, such as but not limited to bolt, screw or rivet. Further, the flanges 208 include a first set of orifices 210 to engage with the first set of fasteners. In one example, the first set of orifices 210 include threads to engage with the first set of fasteners. In another example, the first set of orifices 210 include anti-creep rings to engage with the first set of fasteners.

In another aspect, the second portion 206 of the energy-absorbing element 200 is fixed to the third portion 302 of the towing element 300 by over-moulding in plastic 102. In one example, the energy-absorbing element 200 is pre-formed into the hollow structure in a first process, and then the energy-absorbing element 200 together with the towing element 300 is over-moulded in plastic 102 in a second process. In another example, the energy-absorbing element 200 is formed into the hollow structure and then the energy-absorbing element 200 together with the towing element 300 is over-moulded in plastic 102 in a single process.

In one example, the energy-absorbing element 200 comprises one sheet 202 forming various sides of the energy-absorbing element 200. The third portion 302 of the towing element 300 is disposed behind the sheet 202 at the second portion 206 of the energy-absorbing element 200, when viewed in a second direction opposite to the first direction A1.

In another example, the energy-absorbing element 200 comprises two sheets 202, a first sheet 202A and a second sheet 202B. The first and second sheets 202A, 202B together form various sides of the energy-absorbing element 200. In one example, the first sheet 202A forms a first set of opposing sides of the energy-absorbing element 200 and the second sheet 202B forms a second set of opposing sides of the energy-absorbing element 200. Further, the first and second sheets 202A, 202B overlap each other at the second portion 206 of the energy-absorbing element 200.

The first and second sheets 202A, 202B can be of any material, such as but not limited to metal, plastic or composite. In one example, the first and second sheets 202A, 202B are made of composite material. In another example, the first and second sheets 202A, 202B are made of organo-sheet material. Further, the first and second sheets 202A, 202B can be of same material or different materials. In one example, the first and second sheets 202A, 202B are made of same organo-sheet material. In another example, the first and second sheets 202A, 202B are made of different organo-sheet materials.

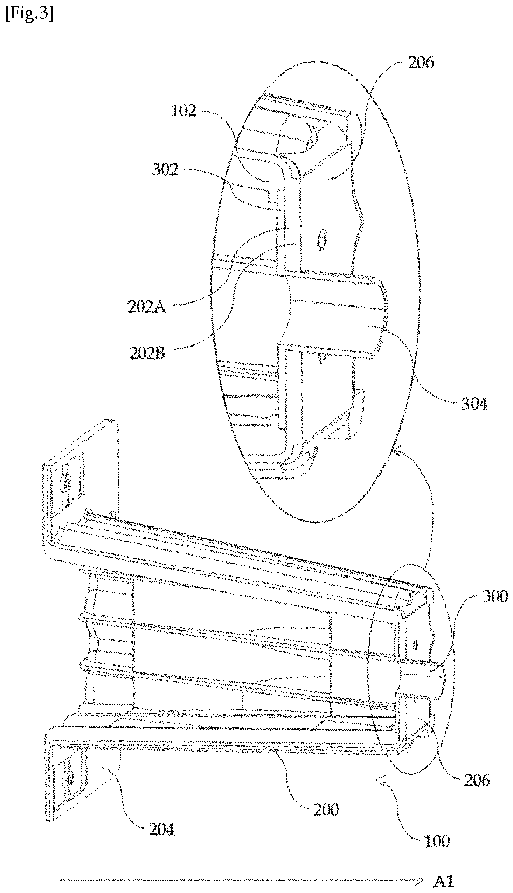

FIG. 3 illustrates a sectional view of the energy-absorbing system 100 of FIG. 1, at the plane A-A'. The third portion 302 of the towing element 300 is disposed behind at least one of the first and second sheets 202A, 202B at the second portion 206 of the energy-absorbing element 200, when viewed in the second direction opposite to the first direction A1. In one example, the third portion 302 of the towing element 300 is disposed behind both the first and second sheets 202A, 202B at the second portion 206 of the energy-absorbing element 200. The third portion 302 of the towing element 300 is sandwiched between the over-moulded layer of plastic 102 at a first side, and the first and second sheets 202A, 202B at a second side. Hence, the third portion 302 of the towing element 300 is secured in position by the over-moulded layer of plastic 102 at the first side, and the first and second sheets 202A, 202B at the second side.

In another example, the third portion 302 of the towing element 300 is disposed in between the first and second sheets 202A, 202B at the second portion 206 of the energy-absorbing element 200. The third portion 302 of the towing element 300 is sandwiched between the over-moulded layer of plastic 102 and the first sheet 202A at the first side, and the second sheet 202B at the second side. Hence, the third portion 302 of the towing element 300 is secured in position by the over-moulded layer of plastic 102 and the first sheet 202A at the first side, and the second sheet 202B at the second side.

In one embodiment, the third portion 302 of the towing element 300 is fixed to the second portion 206 of the energy-absorbing element 200 by a second set of fasteners. The second set of fasteners can be any type of fastener, such as but not limited to bolt, screw or rivet. Further, the second portion 206 of the energy-absorbing element 200 and the third portion 302 of the towing element 300 include a second and third set of orifices 212, 306 respectively, shown in FIG. 2, to engage with the second set of fasteners. In one example, at least one of the second and third set of orifices 212, 306 include threads to engage with the second set of fasteners. In another example, either the second set of orifices 212 or the third set of orifices 306 include welded nuts to engage with the second set of fasteners.

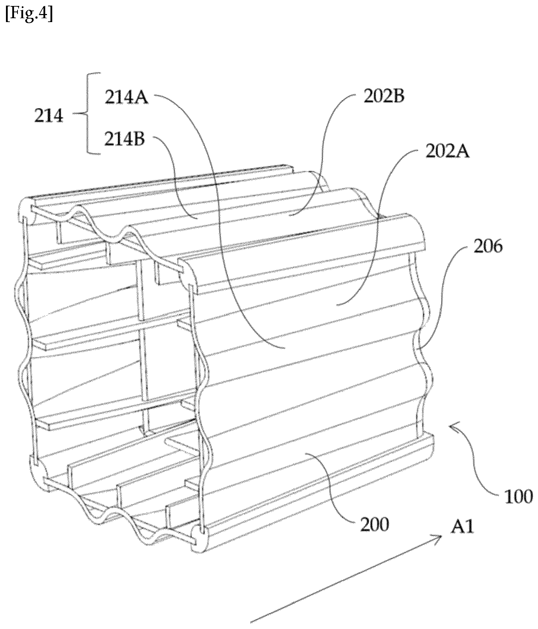

FIG. 4 illustrates a sectional view of the energy-absorbing system 100 of FIG. 1, at the plane B-B'. The energy-absorbing element 200 includes at least one wave projection 214 propagating in a third direction perpendicular to the first direction A1, and extending in the first direction A1 from the first portion 204 to the second portion 206 of the energy-absorbing element 200. The wave projections 214 can be of any shape, such as but not limited to curved wave, square wave, triangle wave or a combination thereof.

In one aspect, at least one of the first and second sheets 202A, 202B include the wave projections 214. In one example, the first sheet 202A includes the wave projections 214 and the second sheet 202B doesn't include the wave projections 214. In another example, the second sheet 202B includes the wave projections 214 and the first sheet 202A doesn't include the wave projections 214. In another example, the first and second sheets 202A, 202B include a first and second set of wave projections 214A, 214B respectively. The first and second set of wave projections 214A, 214B can be same or different. In one example, the first set of wave projections 214A is same as the second set of wave projections 214B. In another example, the first set of wave projections 214A is different from the second set of wave projections 214B.

In one embodiment, the energy-absorbing element 200 is a crash box in the vehicle that deforms upon collision. The crash box is connected to the body of the vehicle at one end and is connected to the towing element 300 at another end. The towing element 300 is adapted to connect the vehicle to a tow truck. In one example, the towing element 300 is connected to the tow truck through an intermediate element, such as a rope or chain. In another example, the towing element 300 is a tow hook holder connected to a tow hook, which in turn is connected to the tow truck through the intermediate element. The tow hook holder and the tow hook can be of any material. In one example, the tow hook holder and the tow hook are made of metal. In one aspect, the third portion 302 of the towing element 300 together with the second portion 206 of the energy-absorbing element 200 is connected to an end structure in the vehicle. In one example, the end structure is a frontend structure, such as a bumper beam in the vehicle.

According to the above embodiments, the third portion 302 of the towing element 300 is surrounded by the energy-absorbing element 200 and is fixed to the second portion 206 of the energy-absorbing element 200. Hence, the towing element 300 does not separate from the energy-absorbing element 200, when the tow truck tows the vehicle in the first direction A1 from the first portion 204 to the second portion 206. Further, the first and second set of wave projections 214A, 214B provided in the energy-absorbing element 200 helps in increasing the stiffness of the energy-absorbing element 200. Therefore, the possibility of deformation or shearing occurring in the energy-absorbing system 100 is avoided or reduced largely, when the tow truck tows the vehicle.

All the above-described embodiments are just to explain the present invention while more embodiments and combinations thereof might exist. Hence, the present invention should not be limited to the above-described embodiments alone.

## Claims

1. An energy-absorbing system (100) of a vehicle comprises:
an energy-absorbing element (200) comprising at least one sheet (202) forming a structure with a first portion (204) adapted to connect to a body of the vehicle and a second portion (206) connected to the first portion (204);
a towing element (300) comprising a third portion (302) at least partially surrounded by the energy-absorbing element (200), is fixed to the second portion (206), and a fourth portion (304) connected to the third portion (302), is extending out of the energy-absorbing element (200).

2. The energy-absorbing system (100) as claimed in claim 1, wherein the structure of the energy-absorbing element (200) is a hollow structure.

3. The energy-absorbing system (100) as claimed in claim 2, wherein the first portion (204) forms an open end of the energy-absorbing element (200) and the second portion (206) together with the towing element (300) forms a closed end of the energy-absorbing element (200).

4. The energy-absorbing system (100) as claimed in claim 3, wherein the first portion (204) comprises at least one flange (208) adapted to connect to the body of the vehicle.

5. The energy-absorbing system (100) as claimed in claim 3, wherein the third portion (302) of the towing element (300) is fixed to the second portion (206) of the energy-absorbing element (200) by over-moulding in plastic (102).

6. The energy-absorbing system (100) as claimed in claim 3, wherein the third portion (302) of the towing element (300) is fixed to the second portion (206) of the energy-absorbing element (200) by fasteners.

7. The energy-absorbing system (100) as claimed in any of preceding claims, wherein the energy-absorbing element (200) comprises one sheet (202) forming various sides of the energy-absorbing element (200).

8. The energy-absorbing system (100) as claimed in claim 7, wherein the third portion (302) of the towing element (300) is disposed behind the sheet (202) at the second portion (206) of the energy-absorbing element (200).

9. The energy-absorbing system (100) as claimed in any of claims 1 to 6, wherein the energy-absorbing element (200) comprises two sheets (202), a first sheet (202A) and a second sheet (202B) together forming various sides of the energy-absorbing element (200).

10. The energy-absorbing system (100) as claimed in claim 9, wherein the third portion (302) of the towing element (300) is disposed behind at least one of the first and second sheets (202A, 202B) at the second portion (206) of the energy-absorbing element (200).

11. The energy-absorbing system (100) as claimed in claim 10, wherein the third portion (302) of the towing element (300) is disposed behind both the first and second sheets (202A, 202B) at the second portion (206) of the energy-absorbing element (200).

12. The energy-absorbing system (100) as claimed in claim 10, wherein the third portion (302) of the towing element (300) is disposed in between the first and second sheets (202A, 202B) at the second portion (206) of the energy-absorbing element (200).

13. The energy-absorbing system (100) as claimed in any of preceding claims, wherein the energy-absorbing element (200) comprises at least one wave projection (214).
